# EUROPEAN PATENT APPLICATION

(11) **EP 2 478 956 A1**
(43) Date of publication of application: **25.07.2012**
(21) Application number: 12151628.0
(22) Date of filing: 18.01.2012
(51) Int. Cl.: B01J 20/34, B01D 15/00, C02F 1/28, C02F 1/461, B01J 20/12, B01J 20/16, B01J 20/20, C02F 101/20, C02F 101/22, C02F 103/02

(54) **Regenerable absorption device and method of driving the same**

(30) Priority: 21.01.2011 KR 20110006534
(71) Applicant: Samsung Electronics Co., Ltd., Suwon-si, Gyeonggi-do 442-742 (KR)
(72) Inventor: Kim, Chang Hyun, Seoul (KR); Kim, Hyun Seok, Seoul (KR); Kang, Hyo Rang, Gyeonggi-do (KR); Kim, Jae Eun, Seoul (KR); Yang, Ho Yung, Gyeonggi-do (KR); Lee, Joo Wook, Seoul (KR)
(74) Representative: Greene, Simon Kenneth

(57) **Abstract**

A filter device may include a filter unit including a first electrode and a second electrode that are arranged so as to be spaced apart and opposite to each other. At least one of the first and second electrodes may include an electrode material layer that is electrically conductive. The electrode material layer may include a metal-adsorbing material (metal adsorbent). A voltage applier for applying voltage to the first electrode and the second electrode for a desired amount of time based on the conditions after operation of the filter unit, and a method for driving the same.

## Description

### BACKGROUND

### 1. Field

This disclosure relates to a regenerable filter device and a method of driving the same. The filter device may be used for the removal of various metals.

### 2. Description of the Related Art

The demand for heavy metals has been increasing due to changing industrialization along with economic growth. Many heavy metals have an extensive influence on the human body and the ecosystem due to their relative toxicity, and may also act as a pollutant to the environment such as rivers, soil, and the like.

Water pollution due to indiscriminate heavy metal discharge has caused worldwide problems for decades. Toxic metal elements exerting an adverse influence on the human body and the ecosystem may include chromium (Cr), copper (Cu), lead (Pb), mercury (Pb), manganese (Mn), cadmium (Cd), nickel (Ni), and the like. The generation sources of metal elements may include plating factories, smelting factories, leather factories, paint manufacturing factories, and the like. A relatively large amount of metal is also discharged in the preparation of beverages, ice cream, and the like. Further, iron (Fe), zinc (Zn), copper (Cu), nickel (Ni), manganese (Mn), and the like may be discharged from mines.

The public may be exposed to water pollution problems due to heavy metals. In general, clean water that is treated in a water treatment plant and that satisfies drinking water standards is supplied to waterworks that supply cities and homes. However, it is still possible for heavy metals (such as copper (Cu), lead (Pb), zinc (Zn), cadmium (Cd), and the like that are leached from aged water pipes and the like) to be included when the water is supplied to the user. Among the various heavy metals, lead (Pb), mercury (Hg), cadmium (Cd), and the like are known to have fatal toxicity if accumulated in the body.

Commonly used heavy metal treating methods include precipitation, adsorption, ion exchange, reverse osmosis, biological treatment, and the like. Among them, precipitation and adsorption are typically applied to industrial and public water purification, and biological treatment is partly used, but these are not as appropriate for household water purification due to the problems of size reduction and ease of use. Therefore, reverse osmosis and ion exchange are generally used for household water purifiers.

Although a reverse osmosis filter in a water purifier may remove most impurities, it may also remove beneficial mineral components (Ca, Mg, and the like) existing in the water. Thus, a post-process of adding minerals to the purified water may be required. Furthermore, using reverse osmosis coincident with high energy consumption for removal of a relatively small amount of heavy metals is unfavorable in terms of energy efficiency. If an ion exchange resin filter is used, it may selectively remove heavy metals and may be desirable in terms of energy efficiency, but filter performance may be deteriorated even before the scheduled replacement time depending on the degree of pollution of the inflow water. As a result, the likelihood of drinking heavy-metal-polluted water may increase. Furthermore, the filter requires periodical replacement, thus generating added costs and inconvenience to the user.

### SUMMARY

Various example embodiments relate to a filter device that may selectively adsorb/remove deleterious metals/metal ions existing in water to provide potable and palatable water while maintaining beneficial minerals existing in water.

Various example embodiments relate to a filter device that may be regenerated *in-situ* so as to avoid periodic replacements.

Various example embodiments relate to a method of driving the regenerable filter device.

Various example embodiments relate to a method of driving a regenerable filter device that may regenerate a metal adsorbent by electrochemical regeneration without dismantling the filter device and without using a separate electrolyte.

According to an example embodiment, a filter device may include a filter unit including a first electrode and a second electrode that are arranged so as to be spaced apart and opposite to each other, at least one of the first and second electrodes including one or more electrode material layers having electrical conductivity, the one or more electrode material layers including a metal-adsorbing material (metal adsorbent); and a voltage applier configured to apply a voltage to the first electrode and the second electrode for a desired amount of time according to various conditions after operation of the filter unit.

According to another example embodiment, a filter device may include a filter unit including a first electrode and a second electrode that are arranged so as to be spaced apart and opposite to each other, at least one of the first and second electrodes including a plurality of electrode material layers having electrical conductivity, the plurality of electrode material layers including a metal-adsorbing material (metal adsorbent); and a voltage applier configured to apply a voltage to the first electrode and the second electrode for a desired amount of time according to various conditions after operation of the filter unit.

The filter device may further include a plurality of water-permeable separators between the first electrode and the second electrode, wherein the first electrode, the second electrode, and the plurality of electrode material layers may be electrically connected in series or in parallel.

According to another example embodiment, a method of driving a filter device may include passing inflow water through a filter unit without a voltage application to adsorb metals/metal ions to a metal adsorbent of the filter unit, and applying a voltage to a first electrode and a second electrode so as to desorb metals/metal ions that are adsorbed to the metal adsorbent, thereby regenerating the metal adsorbent. The filter unit may include the first electrode and the second electrode arranged so as to be spaced apart and opposite to each other. At least one of the first electrode and the second electrode may include one or more electrode material layers having electrical conductivity, and the one or more electrode material layers may include the metal adsorbent.

The metal adsorbent may include a basic functional group on its surface that selectively bonds to a metal/metal ion.

The metal adsorbent may be selected from activated carbon, high specific surface area graphite, carbon nanotubes (CNT), mesoporous carbon, activated carbon fiber, a cation exchange resin, zeolite, smectite, vermiculite, or a combination thereof.

One of the first electrode and the second electrode may include a carbon material including a basic functional group on its surface that selectively bonds to metals/metal ions, and the other of the first electrode and the second electrode may be a catalyst-supported electrode including a catalyst for water hydrolysis or an inert electrode including a non-catalytic material.

The catalyst for water hydrolysis or the non-catalytic material may include a metal, a metal oxide, stainless steel, glassy carbon, graphite, carbon black, or a combination thereof. The metal may include platinum (Pt), titanium (Ti), ruthenium (Ru), silver (Ag), gold (Au), iridium (Ir), palladium (Pd), cobalt (Co), vanadium (V), iron (Fe), and a combination thereof, and examples of the metal oxide may include PtO₂, IrO₂, TiO₂, CaTiO₃, NaWO₃, MnO₂, RuO₂, PbO₂, and a combination thereof.

The voltage applier may regenerate the metal adsorbent by an applied voltage *in-situ.* The voltage applier may apply a voltage of a magnitude that is adequate to facilitate the hydrolysis of water between the first electrode and the second electrode.

The filter device may further include a water-permeable separator between the first electrode and the second electrode, and the first electrode and the second electrode may have a helically-wound structure.

The various conditions for applying the voltage may be selected from a desired period of time, a concentration of metal ions, a concentration of mineral components, or a combination thereof. The pH of the surface of the first electrode and/or the second electrode may be locally controlled to about 5 or less by the voltage applied by the voltage applier so that metal ions adsorbed to the metal adsorbent may be desorbed.

Furthermore, the surface of the first electrode and/or the second electrode may be oxidized by the voltage applied by the voltage applier so that a basic functional group may be produced.

### BRIEF DESCRIPTION OF THE DRAWINGS

FIG. 1 is a schematic diagram of a filter device according to an example embodiment.
FIG. 2 shows a metal ion removal mechanism for the filter device of FIG. 1.
FIG. 3 is a schematic diagram of a filter device according to another example embodiment.
FIG. 4 is a schematic diagram of a filter device according to another example embodiment.
FIG. 5 is a schematic diagram of a filter device according to another example embodiment.
FIG. 6 is a graph showing the total dissolved solids (TDS) and the amount of residual Pb of the filter device according to Example 1 over time.
FIG. 7 shows Pb removal rate according to voltage application cycles of the filter devices according to Example 1 and Example 2.
FIG. 8 shows the results of analyzing functional groups on the electrode surface of the filter device according to Example 1, after voltage application, by X ray photoelectron spectroscopy (XPS).

### DETAILED DESCRIPTION

Example embodiments will be described more fully hereinafter with reference to the accompanying drawings. The embodiments may, however, be embodied in many different forms and should not be construed as limited to the ones set forth herein.

In the drawings, the thickness of the layers, films, panels, regions, etc., may have been exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present. As used herein, the term "and/or" includes any and all combinations of one or more of the associated listed items.

It will be understood that, although the terms first, second, third, etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, e.g., "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the term "below" may encompass both an orientation of above and below. The device may be otherwise oriented (rotated 90 degrees or at other orientations) and the spatially relative descriptors used herein interpreted accordingly.

The terminology used herein is for the purpose of describing various embodiments only and is not intended to be limiting of example embodiments. As used herein, the singular forms "a," "an," and "the" are intended to include the plural forms as well, unless the context clearly indicates otherwise. It will be further understood that the terms, "comprises," "comprising," "includes," and/or "including," if used herein, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the shapes of regions illustrated herein but are to include deviations in shapes that result, for example, from manufacturing.

Unless otherwise defined, all terms (including technical and scientific terms) used herein have the same meaning as commonly understood by one of ordinary skill in the art. It will be further understood that terms, including those defined in commonly used dictionaries, should be interpreted as having a meaning that is consistent with their meaning in the context of the relevant art and will not be interpreted in an idealized or overly formal sense unless expressly so defined herein.

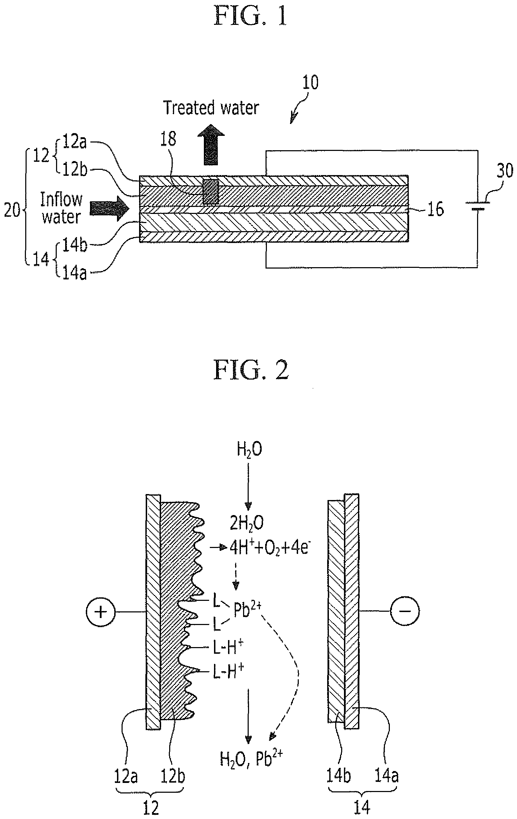

Hereinafter, a filter device according to an example embodiment will be described with reference to FIG. 1 and FIG. 2.

FIG. 1 is a schematic diagram of a filter device according to an example embodiment, and FIG. 2 shows a metal ion removal mechanism for the filter device of FIG. 1. Referring to FIG. 1, the filter device 10 includes a filter unit 20 including a first electrode 12 and a second electrode 14 that are arranged so as to be spaced apart and opposite to each other, at least one of the first electrode 12 and second electrode 14 including an electrode material layer having electrical conductivity, the electrode material layer including a metal-adsorbing material (metal adsorbent); and a voltage applier 30 for applying a voltage to the first electrode 12 and the second electrode 14 for a desired amount of time depending on the conditions after operation of the filter unit 20.

The first electrode 12 and the second electrode 14 may respectively include first and second current collectors 12a and 14a, and first and second electrode material layers 12b and 14b positioned on the first and second current collectors 12a and 14a. The first and second current collectors 12a and 14a may be formed of a graphite foil, a titanium foil, and the like. Alternatively, the first and second current collectors 12a and 14a may be omitted depending on the type of electrode material used for the first and second electrode material layers 12b and 14b. The first and second current collectors 12a and 14a may facilitate the application of a relatively uniform voltage over the electrode during the process of applying a voltage after metal ion adsorption. At least one of the first and second electrode material layers 12b and 14b may include a metal adsorbent. Examples of the metal adsorbent may include activated carbon, high specific surface area graphite (HSAG), carbon nanotubes (CNT), mesoporous carbon, activated carbon fiber, a cation exchange resin, zeolite, smectite, vermiculite, and the like. The high specific surface area graphite may have a specific surface area of about 100 to 300 m²/g.

The metal adsorbent may include a basic functional group (oxygen-containing functional group) on its surface that selectively bonds to heavy metal ions. The basic functional group selectively shows strong adsorption to acidic metal ions, particularly heavy metal ions. For example, a reaction in which a basic functional group, for example, -COO- or -O⁻ (that may be derived from a functional group such as a carboxyl group, a hydroxyl group, and the like) adsorbs heavy metal ions (such as Pb²⁺) is represented by the following Reaction Scheme 1.

[Reaction Scheme 1] -COOH + Pb²⁺ + H₂O → -COOPb⁺ + H₃O⁺ C*-OH + Pb²⁺ + H₂O → C*-OPb⁺ + H₃O⁺ (-COOH)₂ + Pb²⁺ + 2H₂O → (-COO)₂Pb + 2H₃O⁺ C*-O-C* + 2H₂O → C₂OH₂²⁺ + 20H- 2 (C₂OH₂²⁺) + Pb²⁺ → (C₂O)₂Pb²⁺ + 4H⁺

At least one of the first electrode 12 and the second electrode 14 may include a carbon material including a basic functional group on its surface that selectively bonds to metal ions, while the other may be a catalyst-supported electrode including a catalyst for water hydrolysis or an inert electrode including a non-catalytic material. The catalyst for water hydrolysis may lower a water hydrolysis overvoltage so that a relatively high current driving may be enabled under the same voltage in the voltage applying process after metal ion adsorption.

The catalyst for water hydrolysis or the non-catalytic material may include a metal, a metal oxide, stainless steel, glassy carbon, graphite, carbon black, or a combination thereof. The combination refers to a mixture, a stacking structure of two or more components, and the like. The metal may be selected from platinum (Pt), titanium (Ti), ruthenium (Ru), silver (Ag), gold (Au), iridium (Ir), palladium (Pd), cobalt (Co), vanadium (V), iron (Fe), or a combination thereof. The combination refers to a mixture, an alloy, a stacking structure of two or more metals, and the like. Examples of the metal oxide may include PtO₂, IrO₂, TiO₂, CaTiO₃, NaWO₃, MnO₂, RuO₂, PbO₂, or a combination thereof. The combination refers to a mixture, a stacking structure of two or more metal oxides, and the like.

The electrode material used for the first electrode 12 and the second electrode 14 may be coated with nanoparticles. Alternatively, the electrode material may just be deposited as a thin film.

As shown in FIG. 1, when a voltage is not applied, inflow water contacts the metal adsorbent of the electrode, the metal in the inflow water is adsorbed onto the metal adsorbent, and the treated water is discharged through a hole 18 of the electrode. For example, heavy metal ions such as Pb²⁺ in the inflow water may be coordination-bonded to the basic functional groups (L) existing on the surface of the first electrode material layer 12b of the first electrode 12 and, thus, adsorbed.

As shown in FIG. 2, if metal ions are adsorbed to the basic functional group and ion removal rate decreases, a voltage is applied between the first electrode 12 and the second electrode 14 so that metal ions may be desorbed from the metal adsorbent. Specifically, the metal adsorbent is *in-situ* regenerated by the voltage applied between the first electrode 12 and the second electrode 14.

A positive (+) voltage may be applied to the first electrode 12 and a negative (-) voltage may be applied to the second electrode 14. As a result, a water hydrolysis reaction may be induced on the surfaces of the first electrode 12 and the second electrode 14. Consequently, H⁺ ions may be produced on the surface of the first electrode 12 to locally decrease the pH of the electrode surface to about 5 or less. Then, metal ions that are adsorbed to the basic functional groups may be desorbed by a competing reaction and discharged. Furthermore, the filter device 10 may be short-circuited so as to facilitate the metal ion discharge.

A water hydrolysis reaction and a surface oxidation reaction may simultaneously occur on the surface of the first electrode 12. Additional basic functional groups may be introduced on the surface of the first electrode 12 by the surface oxidation reaction. Specifically, the production of basic functional groups of the first electrode 12 may be electrochemically induced. In a case where the metal adsorbent in the first electrode 12 is a carbon-based material such as activated carbon, high specific surface area graphite (HSAG), carbon nanotubes (CNT), mesoporous carbon, activated carbon fiber, and the like, a basic functional group may be introduced so as to have an oxygen/carbon (O/C) atomic ratio of about 0.02 or more (based on XPS surface analysis). According to a non-limiting embodiment, a basic function group may be introduced so as to have an O/C atomic ratio of about 0.03 to 0.2.

Voltage application of the voltage applier 30 may be performed after the metal adsorption reaction has progressed according to one or more desired conditions (for example, after a desired amount of time, or according to a desired concentration of metal ions or mineral components). The voltage applying time may be determined based on the amount of adsorbent, metal ion composition in the inflow water, flow rate of treated water, and the like. The filter device 10 may further include a sensor (or a monitoring system) that may detect fluidic characteristics of the treatment water. The voltage application may be performed by applying a pulse voltage in an interval of about 0.1 seconds to about 5 minutes.

A concentration of metal ions (e.g., heavy metal ions) in the treatment water may be measured (and/or monitored). For example, a voltage may be applied if the concentration of metal ions is above a drinking water standard and/or a voltage may be applied if the concentration of metal ions or mineral components of the treated water is not appropriate for drinking water. The filter device 10 may further include a sensor (and/or a monitoring system) that may detect a concentration of metal ions (and/or mineral components).

The voltage applier 30 may apply a voltage of a magnitude that allows hydrolysis of water between the first electrode 12 and the second electrode 14. The voltage of a magnitude that allows hydrolysis of water may be about 1.23 V or more, for example about 2 V to about 30 V.

The filter device 10 may electrochemically regenerate the performance of the metal adsorbent by applying a voltage between the first electrode 12 and the second electrode 14 without dismantling the device. Furthermore, the filter device 10 may regenerate the performance of the metal adsorbent under inflow water conditions without using a separate electrolyte. As described, since a metal adsorption process and a regeneration process of a basic functional group for metal adsorption may be performed by *in-situ* processes, metal ions (particularly heavy metal ions) may be selectively removed by a relatively simple method. If metal ions are removed in this way, the filter device may be semi-permanently used and a filter device that may decrease the maintenance cost of a filter may be provided.

A water-permeable separator 16 may be inserted between the first electrode 12 and the second electrode 14. The separator 16 may enable a relatively smooth flow of inflow water. The separator 16 may also function as an insulator during voltage application by the voltage applier 30. The separator 16 may be formed of a polyolefin such as polyethylene, polypropylene, and the like.

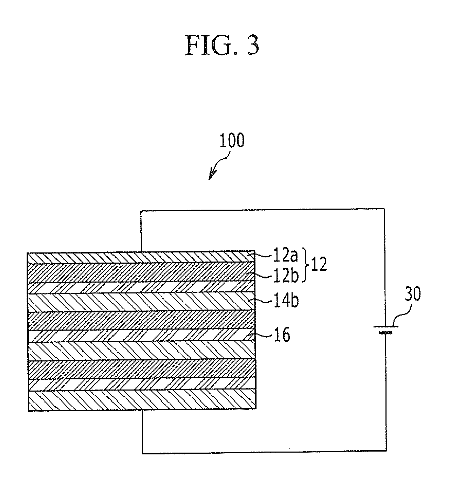

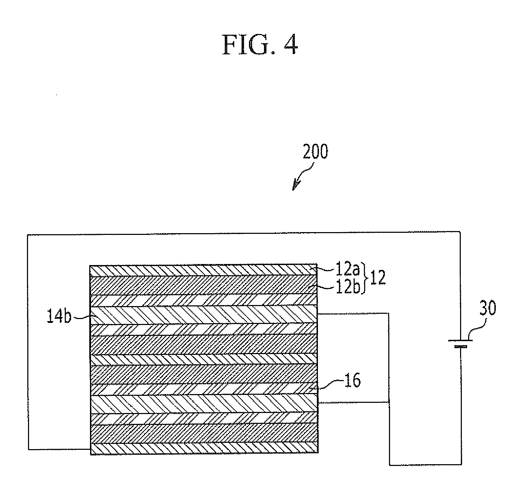

FIG. 3 is a schematic diagram of a filter device 100 according to another example embodiment. FIG. 4 is a schematic diagram of a filter device 200 according to another example embodiment. FIG. 3 shows a filter device 100 including filter units including a first current collector 12a, a plurality of first electrode material layers 12b, a plurality of separators 16, and a plurality of second electrode material layers 14b, which are electrically connected in series. FIG. 4 shows a filter device 200 including filter units including a plurality of first current collectors 12a, a plurality of first electrode material layers 12b, a plurality of separators 16, and a plurality of second electrode material layers 14b, which are electrically connected in parallel.

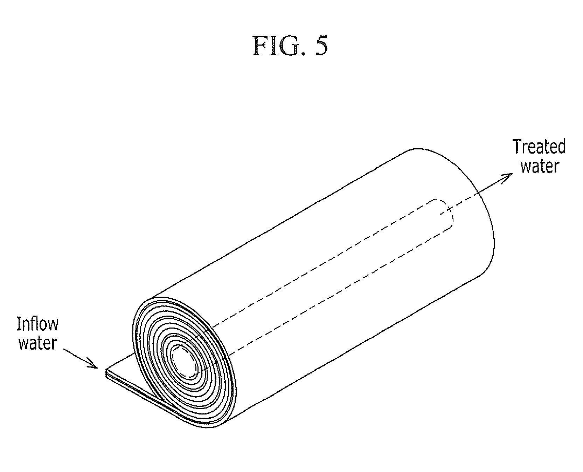

FIG. 5 is a schematic diagram of a filter device according to another example embodiment. Referring to FIG. 5, the filter units may be helically wound and introduced into a case, and then the voltage applier may be connected. However, it should be understood that example embodiments are not limited thereto.

The following examples illustrate a non-limiting embodiment in more detail. However, it should be understood that the scope of the disclosure is not to be limited to these examples.

### Example 1

### 1) Manufacture of electrode

About 40 g of high specific surface area graphite (HSAG, average specific surface area: 204 m²/g), about 10 g of carbon black, about 4.17 g of polytetrafluoroethylene (PTFE) suspension (60 wt%), and about 100 g of propylene glycol are introduced into an agitated vessel, and then kneaded and molded. The molded products are respectively dried at a high temperature at about 80°C, about 120°C, and about 200°C for about 1 hour to prepare a first electrode material layer of a sheet type having an area of about 10x10 cm² and a weight of about 2.5 g.

### 2) Manufacture of a filter device

A graphite foil is used as a current collector, and an open mesh type of polyester (opening size: about 100 µm) is used as a separator. The graphite foil/first electrode material layer/separator/IrO₂ counter electrode/graphite foil are deposited in this order, and then they are fastened with a screw to manufacture a filter unit. A voltage applier is connected thereto to manufacture a filter device.

### Example 2

About 40 g of activated carbon (average specific surface area: about 1518 m²/g), about 10 g of carbon black, about 4.17 g of polytetrafluoroethylene (PTFE) suspension (60 wt%), and about 100 g of propylene glycol are introduced into an agitated vessel, and then kneaded and molded. The molded products are respectively dried at a high temperature at about 80°C, about 120°C, and about 200°C for about 1 hour to manufacture a first electrode material layer of a sheet type having an area of about 10x10 cm² and a weight of about 2.5 g.

A filter device is manufactured by the same method as Example 1, using the above first electrode material layer.

### Evaluation of Pb removal performance

CaCl₂, MgSO₄, and NaHCO₃ are added to distilled water so that the concentrations may become about 48.6 ppm, about 18.2 ppm, and about 66.0 ppm, respectively, and Pb(NO₃)₂ is added thereto so that the concentration of Pb²⁺ may become about 300 ppb, to prepare inflow water with conductivity of about 210 µ S/cm. The inflow water is supplied to the filter device according to Example 1 at about 10 mL/min.

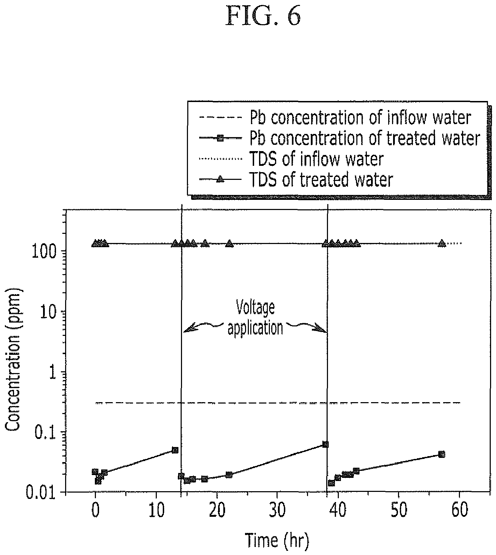

Conductivity and residual Pb concentration of treatment water are measured over time to confirm Pb removal performance. When the Pb removal performance remarkably decreases, voltages of about 4.9 V / 0 V are respectively maintained for about 10 minutes under an inflow water condition to progress deionization/regeneration. Total dissolved solids (TDS) and residual Pb amount are measured over time after regeneration, and are as shown in FIG. 6.

Referring to FIG. 6, since total dissolved solids (TDS) of treated water are maintained identically to TDS of inflow water, it can be seen that concentrations of excessive ions such as Ca, Mg, Na, and the like in inflow water are maintained in treated water, indicating that conductivity of the treated water is maintained to a level of the inflow water. It can be seen from FIG. 6 that about 90% or more of about 300 ppb or more of Pb is removed, and after voltage application, Pb removal performance is recovered to the initial level.

### Evaluation of Pb removal performance under accelerated condition

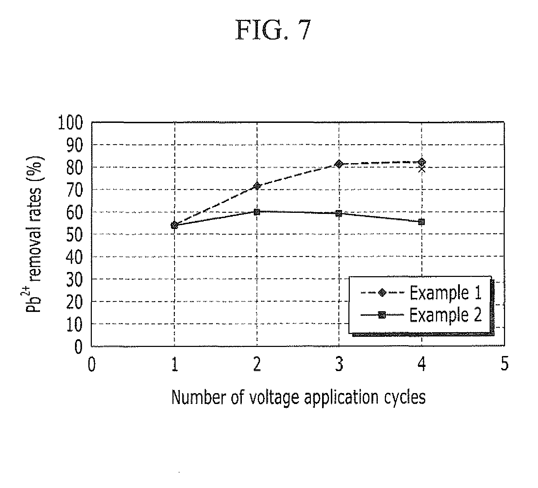

CaCl₂, MgSO₄, and NaHCO₃ are added to distilled water so that the concentrations may become about 48.6 ppm, about 18.2 ppm, and about 66.0 ppm, respectively, and Pb(NO₃)₂ is added thereto so that the concentration of Pb²⁺ may become about 3 ppm, to prepare inflow water. The inflow water is respectively supplied to the filter devices according to Example 1 and Example 2 at about 10 mL/min. Pb²⁺ removal rates according to the number of voltage application cycles of the filter devices of Example 1 and Example 2 are shown in FIG. 7. As shown in FIG. 7, the Pb removal rate of the filter device of Example 1 shows a slight elevation whereas the rate in Example 2 is maintained at almost constant level after voltage application.

### Evaluation of an electrode surface functional group

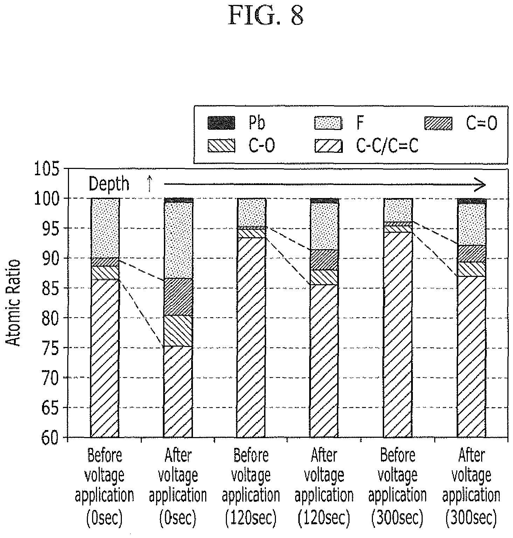

The functional groups on the electrode surface of the filter device of Example 1 after voltage application are measured by X-ray photoelectron spectroscopy (XPS), and results are as shown in FIG. 8. As shown in FIG. 8, since C-O bonds and C=O bonds increase in the electrode after the voltage application and regeneration processes, it can be seen that functional groups including these bonds increase on the electrode surface.

While various example embodiments have been described herein, it should be understood that the scope of the disclosure is not limited to such embodiments, but, on the contrary, is intended to cover all modifications and equivalent arrangements that would have been appreciated by those ordinarily skilled in the art.

## Claims

1. A filter device comprising:
a filter unit (20) including a first electrode (12) and a second electrode (14) spaced apart from each other, at least one of the first and second electrodes including one or more electrode material layers that are electrically conductive, the one or more electrode material layers including a metal-adsorbing material; and
a voltage applier (30) configured to apply a voltage to the first electrode and the second electrode according to a condition.

2. The filter device of claim 1, wherein the voltage applier (30) is configured to apply a voltage to the first electrode and the second electrode for a period of time after operation of the filter unit.

3. The filter device of claim 1 or 2, wherein the metal-adsorbing material includes a basic functional group that selectively bonds to a metal.

4. The filter device of any preceding claim, wherein the metal-adsorbing material is selected from activated carbon, high specific surface area graphite, carbon nanotubes (CNT), mesoporous carbon, activated carbon fiber, a cation exchange resin, zeolite, smectite, vermiculite, or a combination thereof.

5. The filter device of any preceding claim, wherein one of the first electrode and the second electrode includes a carbon material comprising a basic functional group that selectively bonds to metals, and the other of the of the first electrode and the second electrode is a catalyst-supported electrode including a catalyst for water hydrolysis or an inert electrode comprising a non-catalytic material.

6. The filter device of claim 5, wherein the catalyst for water hydrolysis or the non-catalytic material is selected from a metal, a metal oxide, stainless steel, glassy carbon, graphite, carbon black, or a combination thereof, and optionally wherein the catalyst for water hydrolysis or the non-catalytic material is selected from platinum (Pt), titanium (Ti), ruthenium (Ru), silver (Ag), gold (Au), iridium (Ir), palladium (Pd), cobalt (Co), vanadium (V), iron (Fe), PtO₂, IrO₂, TiO₂, CaTiO₃, NaWO₃, MnO₂, RuO₂, PbO₂, or a combination thereof.

7. The filter device of any preceding claim, wherein the voltage applier is configured to regenerate the metal-adsorbing material *in-situ* with the voltage.

8. The filter device of any preceding claim, further comprising:
a water-permeable separator (16) between the first electrode and the second electrode.

9. The filter device of any preceding claim, wherein the first electrode (12) and the second electrode (14) have a helically-wound structure.

10. The filter device of any preceding claim, wherein the condition is selected from a desired time, a concentration of metals, a concentration of mineral components, or a combination thereof.

11. The filter device of any preceding claim, wherein the one or more electrode material layers include a plurality of electrode material layers that are electrically conductive; and optionally
a plurality of water-permeable separators (16) between the first electrode and the second electrode,
wherein the first electrode (12), the second electrode (14), and the plurality of electrode material layers are electrically connected in series or parallel.

12. A method for driving a filter device, the method comprising:
passing inflow water through a filter unit without a voltage application to adsorb metals by a metal-adsorbing material of the filter unit (20), the filter unit including a first electrode (12) and a second electrode (14) spaced apart from each other, at least one of the first electrode and the second electrode including one or more electrode material layers that are electrically conductive, the one or more electrode material layers including the metal-adsorbing material; and
applying a voltage to the first electrode (12) and the second electrode (14) to desorb metals adsorbed to the metal-adsorbing material to regenerate the metal-adsorbing material.

13. The method of claim 12, wherein the passing inflow water includes selectively bonding the metals to the metal-adsorbing material with a basic functional group.

14. The method of claim 12, or 13, wherein the applying a voltage includes
regenerating the metal-adsorbing material with a voltage applier under an inflow water condition without a separate electrolyte introduction.

15. The method of claim 12, 13 or 14, wherein the applying a voltage includes at least one of:
facilitating hydrolysis of water between the first electrode and the second electrode;
controlling a pH of a surface of at least one of the first electrode and the second electrode to about 5 or less to desorb metals adsorbed to the metal-adsorbing material; and
oxidizing a surface of at least one of the first electrode and the second electrode to produce a basic functional group.
